(19) **Europäisches Patentamt**

**European Patent Office**

**Office européen des brevets**

(11) Veröffentlichungsnummer: **0 198 453**
**B1**

(12) # EUROPÄISCHE PATENTSCHRIFT

(45) Veröffentlichungstag der Patentschrift:
28.12.88

(51) Int. Cl.⁴: **B 27 L 1/00**

(21) Anmeldenummer: **86105062.3**

(22) Anmeldetag: **12.04.86**

(54) Vorrichtung zum Entasten und/oder Entrinden von Baumstämmen.

(30) Priorität: **19.04.85 DE 3514240**

(43) Veröffentlichungstag der Anmeldung:
**22.10.86 Patentblatt 86/43**

(45) Bekanntmachung des Hinweises auf die Patenterteilung:
**28.12.88 Patentblatt 88/52**

(84) Benannte Vertragsstaaten:
**AT CH DE FR IT LI NL SE**

(56) Entgegenhaltungen:
**DE-A- 2 165 557**
**DE-B- 2 452 481**

(73) Patentinhaber: **Gebrüder Jäckle GmbH Maschinen- & Gerätebau, Büsslingerstrasse 25,
D-7709 Hilzingen 3 (DE)**

(72) Erfinder: **Jäckle, Lothar, Büsslingerstrasse 23,
D-7709 Hilzingen 3 (DE)**
Erfinder: **Jäckle, Georg, Büsslingerstrasse 23,
D-7709 Hilzingen 3 (DE)**
Erfinder: **Jäckle, Franz, Büsslingerstrasse 23,
D-7709 Hilzingen 3 (DE)**

(74) Vertreter: **Weiss, Peter, Dr., WEISS & OTT
Schlachthausstrasse 1 Postfach 466, D-7700 Singen a.H. (DE)**

**Beschreibung**

Die Erfindung betrifft eine Vorrichtung zum Entasten und/oder Entrinden von Baumstämmen, bestehend aus einem Rahmen sowie einem als Aufnahmemulde für die durchzuziehenden Baumstämme ausgebildeten Tragrahmen und einem an einem mittels eines Hubzylinders bewegbaren Ausleger angeordneten absenkbaren Teils, wobei an letzterem wie auch am Tragrahmen Messer vorgesehen sind.

Eine derartige Vorichtung beschreibt die DE-PS 2165557. Dort wird ein Spannkasten an einem Schlepper beschrieben, der aus mehreren Teilen zusammengesetzt ist, die über parallel zum eingeführten Stamm geführte Gelenke aufklappbar so miteinander verbunden sind, dass sie in geschlossenem Zustand den Stamm über Führungen fest umspannen und die Schneiden der Entastungs- und Entrindungsmesser gegen die Durchzugsrichtung gerichtet quer zum Stamm an ihm anliegen. Im geöffneten Zustand dagegen sind die Messer und Führungen weiter als die maximale Stammdicke voneinander entfernt. Dabei werden die Schneiden der Messer in Arbeitsstellung durch Federdruck gegen den Stamm des eingeführten Baumes gepresst.

Der Erfinder hat sich zum Ziel gesetzt, diese Vorrichtung, die sich in der Praxis bewährt hat, weiter zu verbessern. Insbesondere soll die Führung der einzelnen Messer wirksamer ausgestaltet und miteinander gekoppelt werden. Ausserdem sollen die Messer, soweit möglich, in eine günstigere Position zum Stamm gebracht werden.

Zur Lösung dieser Aufgabe führt eine Vorrichtung gemäss Anspruch 1.

Im vorliegenden Fall weist die Vorrichtung einmal einen messerbewehrten Einschnitt in der Aufnahmemulde auf, in die der Stamm eingelegt wird. Auch der absenkbare Teil soll einen messerbewehrten giebelförmigen Einschnitt haben, so dass auf diese Weise bereits grosse Teile des Stamms umfasst werden. Hinzu kommen zumindest zwei Seitenmesser, welche in Gebrauchslage in der X-Richtung auf den Stamm einwirken sowie zumindest ein oberes Messer, welches dem Stamm aufliegt. Bevorzugt soll auch von unten her dem Stamm ein unteres Messer anliegen. Die Seitenmesser, das obere und gegebenfalls das untere Messer haben jedes einen gesonderten Antrieb, wobei jedoch bevorzugt diese Antriebe miteinander gekoppelt sind. In einer bevorzugten Ausführungsform der Erfindung sind diese Antriebe auch mit dem Hubzylinder für den Ausleger in einem System verbunden.

Bevorzugt bestehen sämtliche Antriebselemente wie auch der Hubzylinder aus einfach wirkenden Hydraulikzylindern, d. h. sie sind mittels einer hydraulischen Flüssigkeit in eine Richtung bewegbar, die Bewegung in die entgegengesetzte Richtung muss durch andere Mittel vonstatten gehen. Erfindungsgemäss soll dies über eine Pneumatikleitung erfolgen. Dabei hat sich als besonders wirkungsvoll herausgestellt, die Vorrichtung selbst bzw. Teile davon als Luftkammern auszubilden, welche durch die Hydraulikflüssigkeitszugabe unter Druck gesetzt werden. D.h., dass beim Bewegen eines Kolbens im Hydraulikzylinder mittels der hydraulischen Flüssigkeit die Luft in der an den Zylinder andererseits angeschlossenen Pneumatikleitung unter Druck gesetzt und damit in den Luftkammern komprimiert wird. Auf diese Weise erübrigt sich beim Gebrauch der Vorrichtung im Wald das Mitführen eines gesonderten Pressluftspeichers. Die Hydraulikleitung dagegen kann an den Schlepper, an welchem die Vorrichtung in der Regel hängt, angeschlossen werden. Als Luftkammern können alle möglichen Teile der Vorrichtung dienen

Bevorzugt soll die Pneumatikleitung mit der Kolbenrücktriebskammer des Hubzylinders und mit den Kolbenvortriebskammern der Antriebselemente verbunden sein. Ist auch ein unteres Messer vorgesehen, so kann dieses, da es meist am Rahmen bzw. Tragrahmen selbst befestigt ist, einen eigenen Anschluss direkt an die Luftkammer aufweisen. Demgegenüber ist dann die Hydraulikleitung mit der Kolbenvortriebskammer des Hubzylinders sowie den Kolbenrücktriebskammern der Antriebe der Seitenmesser verbunden. Das obere und untere Messer weisen dagegen keinen Anschluss an die Hydraulikleitung auf. Dies ist auch nicht notwendig, da die wesentliche Lage des oberen und des unteren Messers zueinander von der Lage des absenkbaren Teils zu der Aufnahmemulde bestimmt wird. Die jeweiligen Messerantriebe müssen hier lediglich die Dickendifferenz des Baumstamms überbrücken. Da hier die Zylinder unter dem Druck der Luft stehen, werden sie sanft an den Stamm angepresst. Mit dem Anheben des absenkbaren Teils wird auch das obere Messer vom Stamm entfernt, so dass es sich nicht störend auswirkt. Anders verhält es sich mit den Seitenmessern, bei denen es sich als günstig erwiesen hat, wenn diese hydraulisch vom Stamm wegbewegt werden.

Die Vorrichtung arbeitet demnach folgendermassen:

Zum Öffnen der Vorrichtung, d. h. zum Anheben des Auslegers wird die Hydraulikleitung unter Druck gesetzt. Damit fliesst Hydraulikflüssigkeit in die Kolbenvortriebskammer des Hubzylinders, so dass der Ausleger angehoben wird. Gleichzeitig fliesst Hydraulikflüssigkeit in die Kolbenrücktriebskammern der Antriebe der Seitenmesser, so dass diese geöffnet werden. Damit sind alle störenden Teile für das Einlegen eines Baumstammes beseitigt und gleichzeitig die Luftkammer unter Druck gesetzt.

Nach dem Einlegen des Baumstammes wird die Hydraulikflüssigkeitszufuhr abgeschaltet. Durch das Gewicht des Auslegers und insbesondere durch die in der Luftkammer komprimierte Luft wird der Kolben des Hubzylinders zurückgeführt, der Ausleger senkt sich ab bis der absenkbare Teil dem Stamm aufliegt. Gleichzeitig werden durch die Pressluft die Kolbenvortriebskammern der Antriebe für die Seitenmesser unter Druck gesetzt, so dass sich die Klingen dieser Seitenmesser sanft dem Baumstamm anlegen. Das gleiche geschieht auch mit dem oberen und gegebenfalls mit dem unteren Messer. Nimmt der Durchmesser beim Durchziehen des Stammes durch die Vorrichtung ab, so werden infolge der Pressluft die Messer nachgeführt.

Das obere Messer und die Seitenmesser sollen bevorzugt an einer Tragplatte des absenkbaren Teils befestigt sein, so dass sie bei dessen Anheben vollständig aus dem Wege für den einzulegenden Stamm sind. Selbstverständlich können die Seitenmesser aber auch mit Rahmen bzw. Tragrahmen selbst befestigt sein. Im Rahmen der Erfindung liegt auch, dass nicht nur 3, sondern 4 und mehr Messer vorgesehen sind.

Der absenkbare Teil besteht bevorzugt aus der eben genannten Tragplatte sowie einer ihr gegenüberliegenden Stirnplatte, wobei beide Teile miteinander verbunden sind. Sie sollen soweit auseinander liegen, dass sie die Aufnahmemulde für den Stamm übergreifen, wobei an dieser Aufnahmemulde zum verbesserten Einlegen des Stamms Leitpfosten vorgesehen sind. Beim Durchziehen des Stamms wirken erhebliche Kräfte auf den absenkbaren Teil ein, zumal er ebenfalls mit seinen Messern den Stamm schält bzw. entastet. Diese Zugkräfte werden nun nicht mehr auf den Ausleger übertragen, sondern durch ein Anschlagen der Tragplatte bzw. Stirnplatte an den Leitpfosten bzw. der Aufnahmemulde aufgenommen.

Bezüglich der Führung der Klingen, insbesondere der Seitenmesser, hat sich der Erfinder noch eine weitere Verbesserung einfallen lassen. Während ursprünglich nach der DE-PS 2165557 die Lage der Messer zum Stamm von dessen Dicke bestimmt war, hat der Erfinder nunmehr die Messer so gelagert, dass sie immer im gleichen Winkel zum Stamm auftreffen. Hierzu sind die Messer über zwei Führungsstangen mit der Vorrichtung gelenkig verbunden, wobei die Führungsstangen eine parallelogrammartige Führung gewährleisten, welche ein Abweichen der Messer von einem vorbestimmten Auftreffwinkel auf den Stamm verhindert.

Weitere Vorteile, Merkmale und Einzelheiten ergeben sich aus der nachfolgenden Beschreibung bevorzugter Ausführungsbeispiele sowie anhand der Zeichnung; diese zeigt in

Figur 1 eine perspektivische Ansicht einer erfindungsgemässen Vorrichtung zum Entasten und/oder Entrinden von Baumstämmen;

Figur 2 eine Seitenansicht auf wesentliche Trag- bzw. Rahmenteile der Vorrichtung nach Figur 1;

Figur 3 eine Draufsicht auf seitliche Entastungsmesser;

Figur 4 eine Draufsicht auf ein oberes und ein unteres Entastungs- bzw. Entrindungsmesser;

Figur 5 eine schematische Darstellung der hydraulischen bzw. pneumatischen Anlage der Vorrichtung nach Figur 1.

Eine Vorrichtung R zum Entasten und/oder zum Entrinden von Baumstämmen weist einen Rahmen 1 aus Stirnprofilen 2 und 3 sowie Seitenprofilen 4 und 5 auf, die als Hohlprofile eine durchgehende Luftkammer bilden. Zusätzlich ist noch ein weiteres Querprofil 6 vorgesehen.

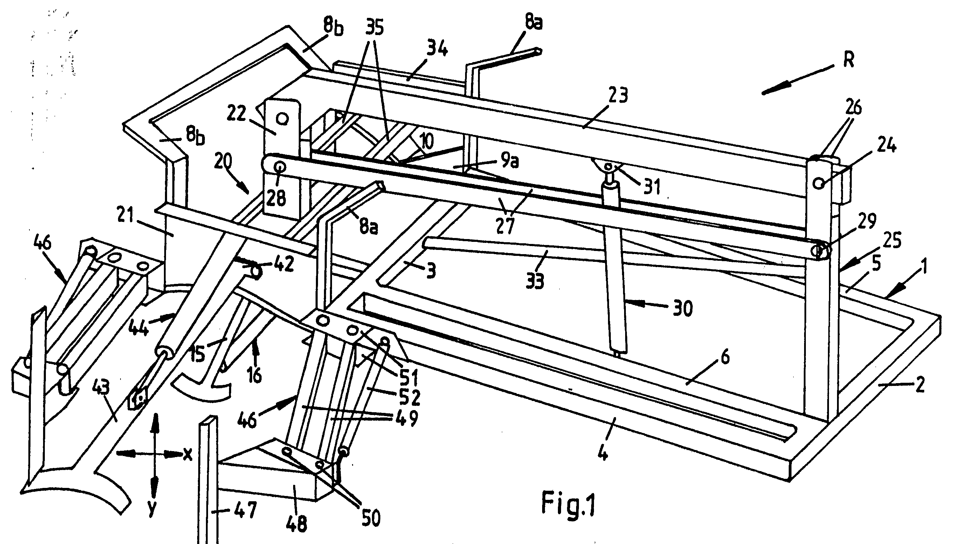

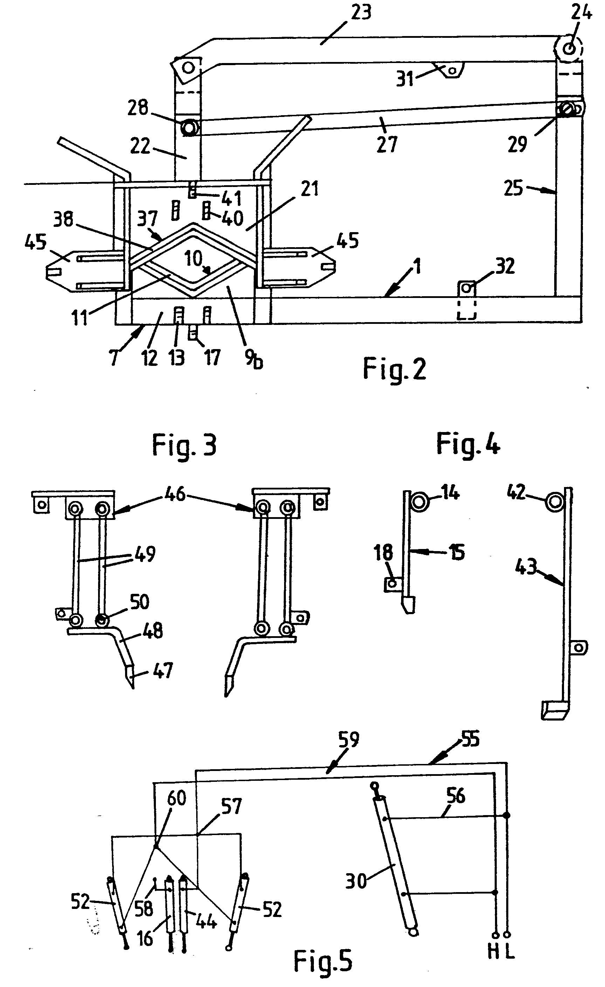

An das Stirnprofil 3 schliesst ein Tragrahmen 7 an, welcher als Aufnahmemulde für die Baumstämme ausgebildet ist. Hierzu sind Leitpfosten 8 an allen vier Ecken vorgesehen, wobei zwei Leitpfosten 8a an dem Stirnprofil 3 festgelegt sind, mit denen zwei weitere Leitpfosten über je einen Profilstreifen 9 verbunden sind, welche einen keilförmigen Einschnitt 10 besitzen. In Figur 1 ist der hintere Profilstreifen 9a zu sehen, während Figur 3 den vorderen Profilstreifen 9b zeigt. Der Einschnitt 10 ist von Messerblättern 11 belegt. Jeder Profilstreifen stützt sich im übrigen auf einem Stützprofil 12 ab. An dem vorderen Stützprofil 12 nach Figur 2 sind weiterhin zwei Laschen 13 angeformt, welche der Aufnahme einer Hülse 14 (Fig. 4) und eines diese Hülse 14 und Laschen 13 durchsetzenden, nicht näher gezeigten Bolzens dienen, um den ein unteres Entastungs- bzw. Entrindungsmesser 15 in vertikaler Richtung X zu der Vorrichtung R bewegbar ist. Die Bewegung erfolgt durch ein Zylinder-Kolben-System 16, welches mit Schweissstücken 17 und 18 einmal am Stützprofil 12 und zum anderen am unteren Messer 15 angelegt ist.

In Figur 1 ist der Profilstreifen 9b mit den Laschen 13 bzw. die Hülse 14 von einer Tragplatte 21 verdeckt, welche zu einem absenkbaren Teil 20 gehört, der über einen Kupplungsbalken 22 mit einem Ausleger 23 verbunden ist. Dieser Ausleger 23 ruht anderenends über einen Gelenkzapfen 24 zwischen zwei von einem Ständer 25 gebildeten Wangen 26. Zur Führung des Teils 20 sind weiterhin zum Ausleger 23 parallel angeordnete Schienen 27 vorgesehen, welche sowohl den Kupplungsbalken 22 als auch den Ständer 25 umfassen und mit diesem über Drehbolzen 28 und 29 verbunden sind. Der Ausleger 23 stützt sich über einen Hubzylinder 30 an Befestigungslaschen 31 und 32 gegenüber dem Querprofil 6 ab.

Zwischen Stirnprofil 3 und Ständer 25 ist ein Versteifungsrohr 33 vorgesehen, welches als Luftkammer mit einbezogen werden kann.

Der absenkbare Teil 20 besteht zum einen aus der Tragplatte 21 und einer weiteren, dieser gegenüberliegenden Stirnplatte 34, wobei beide Platten 21 und 34 über Querstreben 35 miteinander verbunden sind, welche auch an dem Kupplungsbalken 22 festliegen. Sowohl Tragplatte 21 wie auch Stirnplatte 34 sind spiegelbildlich zu den Profilstreifen 9 eingeschnitten, wobei dieser Einschnittgiebel 37 ebenfalls mit einem Messerblatt 38 versehen ist. Tragplatte 21 und Stirnplatte 34 greifen im übrigen jeweils beidseits über die entsprechenden Leitpfosten 8, welche dann beim Durchziehen eines Baumstammes durch den Raum zwischen den beiden Einschnitten 10 und 37 als Widerlager dienen, so dass der Ausleger 23 weniger beansprucht wird.

Die Tragplatte 21 ist weiterhin von zwei Stützlaschen 40 und einer Halterung 41 belegt zur Aufnahme einer Gelenkhülse 42 eines oberen Entastungs- bzw. Entrindungsmessers 43 und dessen Bewegungsorgans 44. Letzteres ermöglicht eine Bewegung des oberen Messers 43 in der Y-Richtung. Beidseits der Tragplatte 21 kragen von dieser zwei Flügellaschen 45, ab welche je ein Seitenmesser 46 halten. Da beide Seitenmsser 46 gleich ausgebildet sind, gelten im folgenden die gleichen Bezugszahlen. Eine Messerklinge 47 ist an einem Führungsblock 48 festgelegt, in welchen zwei parallel geführte Führungsstangen 49 eingreifen und über Drehbolzen 50 verbunden sind. Anderenends werden die Führungsstangen 49 von zwei Streifen 51 an den Flügellaschen 45 aufgenommen, mit denen sie ebenfalls eine gelenkige Verbindung eingehen. Die Bewegung der Seitenmesser 46 in Richtung X wird von Antrieben 52 gesteuert.

Die Bewegungen der Vorrichtung R erfolgen durch einfach wirkende Hydraulikantriebe, wobei die Rückbewegung durch die im Rahmen 1 komprimierte Luft bewirkt wird. Nach Figur 5 ist die Hydraulik mit H und der Anschluss an die Luftkammer des Rahmens 1 mit L bezeichnet. Hierzu ist am Rahmen 1 ein nicht gezeigtes Ventil, gegebenenfalls mit Druckmessgerät, vorgesehen. Der Hydraulikanschluss wird in Gebrauchslage bevorzugt an einem Schlepper vorgenommen.

Die Pneumatikleitung 55 weist eine erste Abzweigung 56 zu einer Kolbenrücktriebskammer des Hubzylinders 30 auf. Sodann ist sie über ein Kreuzstück 57 mit den Kolbenvortriebskammern der Antriebe 52 der Seitenmesser 46 sowie des Bewegungsorgans 44 des oberen Messers 43 verbunden. Das untere Messer 15 weist einen eigenen Anschluss 58 direkt an dem Rahmen 1 auf. Die Hydraulikleitung 59 ist dagegen mit der Vortriebskammer des Hubzylinders 30 und über ein T Stück 60 mit den Rücktriebskammern der Antriebe 52 der Seitenmesser 46 verbunden.

## Patentansprüche –

1. Vorrichtung zum Entasten und/oder zum Entrinden von Baumstämmen, bestehend aus einem Rahmen sowie einem als Aufnahmemulde für die durchzuziehenden Baumstämme ausgebildeten Tragrahmen und einem an einem mittels eines Hubzylinders bewegbaren Ausleger angeordneten absenkbaren Teils, wobei an letzterem wie auch am Tragrahmen Messer vorgesehen sind, welche mit Antriebselementen versehen sind, dadurch gekennzeichnet, dass die Antriebselemente, jeweils bestehend aus einem Zylinder-Kolben-System (52), und der Hubzylinder (30) einerseits zum Öffnen der Messer (43, 46) in eine Hydraulikleitung (59) und andererseits zum Schliessen der Messer (43, 46) in eine Pneumatikleitung (55) eingeschaltet sind.

2. Vorrichtung nach Anspruch 1, dadurch gekennzeichnet, dass der Rahmen (1) und gegebenenfalls der Tragrahmen (7) sowie weitere Teile der Vorrichtung (R), wie ein Versteifungsrohr (33), ein Ständer (25) oder dgl., als Luftkammern ausgebildet sind, welche mit den Antriebselementen (52) und dem Hubzylinder (30) über die Pneumatikleitung (55) verbunden sind.

3. Vorrichtung nach Anspruch 1 oder 2, dadurch gekennzeichnet, dass die Pneumatikleitung (55) mit einer Kolbenrücktriebskammer des Hubzylinders (30) und mit Kolbenvortriebskammern der Antriebselemente (52) verbunden ist.

4. Vorrichtung nach einem der Ansprüche 1 bis 3, dadurch gekennzeichnet, dass die Hydraulikleitung (59) die Kolbenvortriebskammer des Hubzylinders (30) sowie die Kolbenrücktriebskammer der Antriebe (52) miteinander verbindet.

5. Vorrichtung nach wenigstens einem der Ansprüche 1 bis 4, dadurch gekennzeichnet, dass das Messer (43) am absenkbaren Teil (20) ein eigenes Bewegungsorgan (44), bestehend aus einem Zylinder-Kolben-System, aufweist, dessen Kolbenvortriebskammer mit der Pneumatikleitung verbunden ist.

6. Vorrichtung nach wenigstens einem der Ansprüche 1 bis 5, dadurch gekennzeichnet, dass an dem Tragrahmen (7) ein unteres Messer (15) angeordnet ist, welches ebenfalls einen Antrieb (16), bestehend aus einem Zylinder-Kolben-System aufweist, dessen Kolbenvortriebskammer mit der Pneumatikleitung (55) verbunden ist.

7. Vorrichtung nach wenigstens einem der Ansprüche 1 bis 6, dadurch gekennzeichnet, dass die Seitenmesser (46) sowie das obere Messer (43) an einer Tragplatte (21) des absenkbaren Teils (20) befestigt sind.

8. Vorrichtung nach Anspruch 7, dadurch gekennzeichnet, dass sowohl die Tragplatte (21) wie auch eine ihr gegenüberliegende Stirnplatte (34) den Tragrahmen (7) bzw. Leitpfosten (8) übergreifen.

9. Vorrichtung nach wenigstens einem der Ansprüche 1 bis 8, dadurch gekennzeichnet, dass die Seitenmesser (46) an der Vorrichtung (R), insbesondere an der Tragplatte (21), über eine parallelogrammartige Führung angelenkt sind.

10. Vorrichtung nach Anspruch 9, dadurch gekennzeichnet, dass die parallelogrammartige Führung aus zwei parallelen Führungsstangen (49) besteht, welche einerseits mit der Vorrichtung (R) bzw. der Tragplatte (21) und andererseits mit einem Führungsblock (48) für Messerklingen (47) verbunden sind.

## Claims

1. An apparatus for removing the branches and/or bark from tree trunks, consisting of a frame as well as a supporting frame constructed in the form of a receiving cradle for the tree trunks to be pulled through and a member which can be lowered and which is disposed on an arm which is movable by means of a lifting cylinder, knives, which are provided with driving elements, being provided on the member which can be lowered and on the supporting frame, characterised in that the driving elements, each consisting of a cylinder-piston system (52), and the lifting cylinder (30) are connected, on the one hand into a hydraulic line (59) to open the knives (43, 46) and, on the other hand, into a pneumatic line (55) to close the knives (43, 46).

2. An apparatus according to claim 1, characterised in that the frame (1) and possibly the supporting frame (7) as well as further parts of the apparatus (R), such as a stiffening tube (33), an upright (25) or the like, are constructed in the form of air chambers which are connected to the driving elements (52) and the lifting cylinder (30) via the pneumatic line (55).

3. An apparatus according to claim 1 or 2, characterised in that the pneumatic line (55) is connected to a chamber for driving the piston of the lifting cylinder (30) backwards and to chambers for driving the pistons of the driving elements (52) forwards.

4. An apparatus according to any of the claims 1 to 3, characterised in that the hydraulic line (59) connects the chamber for driving the piston of the lifting cylinder (30) forwards and the chambers for driving the pistons of the drives (52) backwards, to one another.

5. An apparatus according to at least one of claims 1 to 4, characterised in that the knife (43) on the member (20) which can be lowered comprises its own movement member (44) consisting of a cylinder-piston system of which the chamber for driving the piston forwards is connected to the pneumatic line (55).

6. An apparatus according to at least one of claims 1 to 5, characterised in that disposed on the supporting frame (7) is a lower knife (15) which likewise has a drive (16) consisting of a cylinder-piston system, of which the chamber for driving the piston forwards is connected to the pneumatic line (55).

7. A apparatus according to at least one of claims 1 to 6, characterised in that the side knives (46) as well as the upper knife (43) are secured to a supporting plate (21) of the member (20) which can be lowered.

8. An apparatus according to claim 7, characterised in that both the supporting plate (21) and an end plate (34) situated opposite it engage over the supporting frame and guide posts.

9. An apparatus according to at least one of claims 1 to 8, characterised in that the side knives (46) are articulated on the apparatus (R), particularly on the supporting plate (21), via a parallelogram-like guide.

10. An apparatus according to claim 9, characterised in that the parallelogram-like guide consists of two parallel guide bars (49) which are connected on the one hand to the apparatus (R) or to the supporting plate (21) and on the other hand to a guide block (48) for knive blades (47).

**Revendications**

1. Dispositif pour l' ébranchage et/ou l'écorçage de troncs d'arbre, dispositif se composant d'un châssis ainsi que d'un châssis de support en forme d'auge de réception pour les troncs d'arbre à tirer à travers le dispositif ainsi que d'un ensemble abaissable relié de manière mobile à un bras par l'intermédiaire d'un vérin de levage, cet ensemble ainsi que le châssis de support étant munis de couteaux équipés d'éléments d'entraînement, dispositif caractérisé en ce que: les éléments d'entraînement se composent chaque fois d'un vérin (52) et le vérin de levage (30) est relié d'une part pour l'ouverture des couteaux (43, 46) à un circuit hydraulique (59) et d'autre part pour la fermeture des couteaux (43, 46) à un circuit pneumatique (55).

2. Dispositif selon la revendication 1, caractérisé en ce que le châssis (1) et le cas échéant le châssis de support (7) ainsi que d'autres parties du dispositif (R) tels qu'un tube de rigidification (33), un montant (25) ou analogues sont réalisés en forme de chambres pneumatiques reliées aux elements d'entraînement (52) et au vérin de levage (30) par l'intermédiaire de la conduite pneumatique (55).

3. Dispositif selon la revendication 1 ou 2, caractérisé en ce que le circuit pneumatique (45) est relié à une chambre de rappel de piston du vérin de levage (30) et à des chambres d'avancée de piston des éléments d'entraînement (52).

4. Dispositif selon l'une des revendications 1 à 3, caractérisé en ce que le circuit hydraulique (59) de la chambre d'avancée de piston du vérin de levage (30) ainsi que la chambre de rappel de piston des moyens d'entraînement (52) sont reliés.

5. Dispositif selon au moins l'une quelconque des revendications 1 à 4, caractérisé en ce que le couteau (43) est relié à l'ensemble (20), susceptible d'être abaissé, d'un organe de déplacement propre (43) composé d'un vérin dont la chambre d'avancée de piston est reliée au circuit pneumatique (55).

6. Dispositif selon au moins l'une quelconque des revendications 1 à 5, caractérisé par un couteau inférieur (15) prévu sur le châssis de support (7), couteau qui comporte également un moyen d'entraînement (16) composé d'un vérin dont la chambre d'avancéee de piston est reliée au circuit pneumatique (55).

7. Dispositif selon au moins l'une quelconque des revendications 1 à 6, caractérisé en ce que les couteaux latéraux (46) ainsi que le couteau supérieur (43) sont fixés à une plaque de support (21) de la partie abaissable (20).

8. Dispositif selon la revendication 7, caractérisé en ce qu'à la fois la plaque de support (21) et une plaque frontale (34) en regard de la plaque de support débordent du châssis de support (7) ou des montants de guidage (8).

9. Dispositif selon au moins l'une quelconque des revendications 1 à 8, caractérisé en ce que les couteaux latéraux (46) sont articulés sur le dispositif (R) en particulier à la plaque de support (21) par un moyen de guidage en parallèlogramme.

10. Dispositif selon la revendication 9, caractérisé en ce que le moyen de guidage en parallélogramme se compose de deux tiges de guidage parallèles (49) qui sont reliées d'une part au dispositif (R) ou à la plaque de support (21) et d'autre part à un bloc de guidage (38) des lames de couteau (47).

Fig.1

Fig.2

Fig. 3

Fig.4

Fig.5